# EUROPEAN PATENT APPLICATION

(11) **EP 4 418 737 A1**
(43) Date of publication of application: **21.08.2024**
(21) Application number: 24154406.3
(22) Date of filing: 29.01.2024
(51) Int. Cl.: H04W 36/00, H04W 36/36, H04W 76/15

(54) **APPARATUS, METHOD, AND COMPUTER PROGRAM FOR MASTER NODE INITIATED CONDITIONAL PRIMARY SECONDARY CELL CHANGE**

(30) Priority: 16.02.2023 FI 20235173
(71) Applicant: Nokia Technologies Oy, 02610 Espoo (FI)
(72) Inventor: KARABULUT, Umur, 81379 Munich (DE); GÜRSU, Halit Murat, 81379 Munich (DE); STANCZAK, Jedrzej, 50216 Wroclaw (PL); ZHANG, Xin, 82024 Taufkirchen (DE); KORDYBACH, Krzysztof, 51-691 Wroclaw (PL)
(74) Representative: Nokia EPO representatives

(57) **Abstract**

There is provided an apparatus (402, 502, 602) comprising: means for connecting with a user equipment that is in dual connectivity with the master node and a secondary node, wherein the secondary node comprises a primary secondary cell; means for generating a configuration for the user equipment, the configuration for causing the user equipment to associate a special cell with the primary secondary cell of the secondary node; and means for receiving a cell reconfiguration complete message from the user equipment.

## Description

### FIELD

The present application relates to a method, apparatus, and computer program and in particular but not exclusively to apparatus, methods and computer programs for associating cells.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet. In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

A feature of modern communication systems is known as NR dual connectivity. Dual connectivity is a feature that enables a UE to connect to two base stations simultaneously. These two base stations may be referred to as a Master Node (MN) and Secondary Node (SN).

### SUMMARY

According to a first aspect there is disclosed an apparatus comprising: means for connecting with a user equipment that is in dual connectivity with the master node and a secondary node, wherein the secondary node comprises a primary secondary cell; means for generating a configuration for the user equipment, the configuration for causing the user equipment to associate a special cell with the primary secondary cell of the secondary node; and means for receiving a cell reconfiguration complete message from the user equipment.

According to some examples, the master node is a source master node.

According to some examples, the secondary node is a source secondary node.

According to some examples, the apparatus comprises means for generating a cell change execution condition for a target primary secondary cell.

According to some examples, the apparatus comprises means for transmitting a first addition request to a target secondary node, the first addition request for requesting the target secondary node to add the configuration for the user equipment and the cell change execution condition to a first reconfiguration message.

According to some examples, the apparatus comprises means for receiving the first reconfiguration message from the target secondary node, wherein the configuration for the user equipment and the cell change execution condition are embedded in the first reconfiguration message.

According to some examples, the apparatus comprises means for transmitting a second reconfiguration message to the user equipment, wherein the first reconfiguration message is embedded in the second reconfiguration message.

According to some examples, the apparatus comprises means for determining a list of target primary secondary cells for cell change.

According to some examples, the apparatus comprises means for transmitting a secondary node addition request to the secondary node, wherein the secondary node addition request comprises: a preparation request; the list of target primary secondary cells; the configuration for the user equipment; and measurements of primary secondary cells and target primary secondary cells.

According to some examples, the preparation request is for requesting the secondary node to prepare the list of target primary secondary cells with a cell change execution condition.

According to some examples, the apparatus comprises means for determining a cell change execution condition for the list of target primary secondary cells.

According to some examples, the apparatus comprises means for transmitting the determined cell change execution condition to a secondary node.

According to some examples, the apparatus comprises means for receiving a first reconfiguration message from the secondary node, wherein the first reconfiguration message from the secondary node comprises information of target primary secondary cells prepared with a cell change execution condition and the configuration for the user equipment.

According to some examples, the apparatus comprises means for transmitting a second reconfiguration message to the user equipment, wherein the first reconfiguration message from the secondary node is embedded in the second reconfiguration message.

According to some examples, the apparatus comprises means for configuring a cell change execution condition for a target primary secondary cell with an information element associated with secondary nodes.

According to some examples, the apparatus comprises means for embedding the information element and the configuration for the user equipment in a first reconfiguration message received from a target secondary node.

According to some examples, the first reconfiguration message from the target secondary node maps a measurement identification of the information element to a measurement object in the configuration for the user equipment.

According to some examples, the apparatus comprises means for transmitting a second reconfiguration message to the user equipment, wherein the first reconfiguration message is embedded in the second reconfiguration message.

According to some examples, the special cell is defined in a cell change execution condition for a target primary secondary cell.

According to some examples, the cell change execution condition comprises an A3 Event condition or an A5 Event condition.

According to some examples, a determination of an A3 Event condition comprises a determination of whether a power measurement result of the target primary secondary cell is greater by a first predetermined value than a power measurement result of the special cell.

According to some examples, a determination of an A3 Event condition comprises a determination of whether a power measurement result of the target primary secondary cell is lesser by a second predetermined value than a power measurement result of the special cell.

According to some examples, a determination of an A5 Event condition comprises a determination of whether a power measurement result of the special cell is lesser than a first threshold value and that a power measurement result of the target primary secondary cell is greater than a second threshold value.

According to some examples, a determination of an A5 Event condition comprises a determination of whether a power measurement result of the special cell is greater than a third threshold value and that a power measurement result of a target primary secondary cell is lesser than a fourth threshold value.

According to some examples, the first reconfiguration message comprises a secondary node reconfiguration message.

According to some examples, the second reconfiguration message comprises a master node reconfiguration message.

According to some examples, the first reconfiguration message and the second reconfiguration message comprise a Radio Resource Control message.

According to some examples, the means comprises at least one processor; and at least one memory including computer program code, the at least one memory and computer program code configured to, with the at least one processor, cause the performance of the apparatus.

According to a second aspect there is provided a master node apparatus comprising at least one processor; and at least one memory storing instructions that, when executed by the at least one processor, cause the master node apparatus at least to perform: connecting with a user equipment that is in dual connectivity with the master node and a secondary node, wherein the secondary node comprises a primary secondary cell; generating a configuration for the user equipment, the configuration for causing the user equipment to associate a special cell with the primary secondary cell of the secondary node; and receiving a cell reconfiguration complete message from the user equipment.

According to a third aspect there is provided an apparatus comprising: means for connecting to a master node and a secondary node in a dual connectivity network, wherein the secondary node comprises a primary secondary cell; means for receiving, from the master node, a configuration for causing the apparatus to associate a special cell with the primary secondary cell of the secondary node; means for monitoring a target primary secondary cell for a condition; and means for, when the condition has been met, reporting to the master node.

According to some examples, the master node is a source master node.

According to some examples, the secondary node is a source secondary node.

According to some examples, the special cell is defined in the condition.

According to some examples, the condition comprises an A3 Event condition or an A5 Event condition.

According to some examples, a determination of an A3 Event condition comprises a determination of whether a power measurement result of the target primary secondary cell is greater by a first predetermined value than a power measurement result of the special cell.

According to some examples, a determination of an A3 Event condition comprises a determination of whether a power measurement result of the target primary secondary cell is lesser by a second predetermined value than a power measurement result of the special cell.

According to some examples, a determination of an A5 Event condition comprises a determination of whether a power measurement result of the special cell is lesser than a first threshold value and that a power measurement result of the target primary secondary cell is greater than a second threshold value.

According to some examples, a determination of an A5 Event condition comprises a determination of whether a power measurement result of the special cell is greater than a third threshold value and that a power measurement result of a target primary secondary cell is lesser than a fourth threshold value.

According to some examples, the means for reporting to the master node comprises means for: reporting one or more measurements; reporting execution of a cell change by the apparatus.

According to some examples, the means comprises at least one processor; and at least one memory including computer program code, the at least one memory and computer program code configured to, with the at least one processor, cause the performance of the apparatus.

According to a fourth aspect there is provided an apparatus comprising at least one processor; and at least one memory storing instructions that, when executed by the at least one processor, cause the apparatus at least to perform: connecting to a master node and a secondary node in a dual connectivity network, wherein the secondary node comprises a primary secondary cell; receiving, from the master node, a configuration for causing the apparatus to associate a special cell with the primary secondary cell of the secondary node; monitoring a target primary secondary cell for a condition; and, when the condition has been met, reporting to the master node.

According to a fifth aspect there is provided a method comprising: connecting with a user equipment that is in dual connectivity with a master node and a secondary node, wherein the secondary node comprises a primary secondary cell; generating a configuration for the user equipment, the configuration for causing the user equipment to associate a special cell with the primary secondary cell of the secondary node; and receiving a cell reconfiguration complete message from the user equipment.

According to some examples, the master node is a source master node.

According to some examples, the secondary node is a source secondary node.

According to some examples, the method comprises generating a cell change execution condition for a target primary secondary cell.

According to some examples, the method comprises transmitting a first addition request to a target secondary node, the first addition request for requesting the target secondary node to add the configuration for the user equipment and the cell change execution condition to a first reconfiguration message.

According to some examples, the method comprises receiving the first reconfiguration message from the target secondary node, wherein the configuration for the user equipment and the cell change execution condition are embedded in the first reconfiguration message.

According to some examples, the method comprises transmitting a second reconfiguration message to the user equipment, wherein the first reconfiguration message is embedded in the second reconfiguration message.

According to some examples, the method comprises determining a list of target primary secondary cells for cell change.

According to some examples, the method comprises transmitting a secondary node addition request to the secondary node, wherein the secondary node addition request comprises: a preparation request; the list of target primary secondary cells; the configuration for the user equipment; and measurements of primary secondary cells and target primary secondary cells.

According to some examples, the preparation request is for requesting the secondary node to prepare the list of target primary secondary cells with a cell change execution condition.

According to some examples, the method comprises determining a cell change execution condition for the list of target primary secondary cells.

According to some examples, the method comprises transmitting the determined cell change execution condition to a secondary node.

According to some examples, the method comprises receiving a first reconfiguration message from the secondary node, wherein the first reconfiguration message from the secondary node comprises information of target primary secondary cells prepared with a cell change execution condition and the configuration for the user equipment.

According to some examples, the method comprises transmitting a second reconfiguration message to the user equipment, wherein the first reconfiguration message from the secondary node is embedded in the second reconfiguration message.

According to some examples, the method comprises configuring a cell change execution condition for a target primary secondary cell with an information element associated with secondary nodes.

According to some examples, the method comprises embedding the information element and the configuration for the user equipment in a first reconfiguration message received from a target secondary node.

According to some examples, the first reconfiguration message from the target secondary node maps a measurement identification of the information element to a measurement object in the configuration for the user equipment.

According to some examples, the method comprises transmitting a second reconfiguration message to the user equipment, wherein the first reconfiguration message is embedded in the second reconfiguration message.

According to some examples, the special cell is defined in a cell change execution condition for a target primary secondary cell.

According to some examples, the cell change execution condition comprises an A3 Event condition or an A5 Event condition.

According to some examples, a determination of an A3 Event condition comprises a determination of whether a power measurement result of the target primary secondary cell is greater by a first predetermined value than a power measurement result of the special cell.

According to some examples, a determination of an A3 Event condition comprises a determination of whether a power measurement result of the target primary secondary cell is lesser by a second predetermined value than a power measurement result of the special cell.

According to some examples, a determination of an A5 Event condition comprises a determination of whether a power measurement result of the special cell is lesser than a first threshold value and that a power measurement result of the target primary secondary cell is greater than a second threshold value.

According to some examples, a determination of an A5 Event condition comprises a determination of whether a power measurement result of the special cell is greater than a third threshold value and that a power measurement result of a target primary secondary cell is lesser than a fourth threshold value.

According to some examples, the first reconfiguration message comprises a secondary node reconfiguration message.

According to some examples, the second reconfiguration message comprises a master node reconfiguration message.

According to some examples, the first reconfiguration message and the second reconfiguration message comprise a Radio Resource Control message.

According to a sixth aspect there is a method comprising: connecting to a master node and a secondary node in a dual connectivity network, wherein the secondary node comprises a primary secondary cell; receiving, from the master node, a configuration for causing the apparatus to associate a special cell with the primary secondary cell of the secondary node; monitoring a target primary secondary cell for a condition; and, when the condition has been met, reporting to the master node.

According to some examples, the master node is a source master node.

According to some examples, the secondary node is a source secondary node.

According to some examples, the special cell is defined in the condition.

According to some examples, the condition comprises an A3 Event condition or an A5 Event condition.

According to some examples, a determination of an A3 Event condition comprises a determination of whether a power measurement result of the target primary secondary cell is greater by a first predetermined value than a power measurement result of the special cell.

According to some examples, a determination of an A3 Event condition comprises a determination of whether a power measurement result of the target primary secondary cell is lesser by a second predetermined value than a power measurement result of the special cell.

According to some examples, a determination of an A5 Event condition comprises a determination of whether a power measurement result of the special cell is lesser than a first threshold value and that a power measurement result of the target primary secondary cell is greater than a second threshold value.

According to some examples, a determination of an A5 Event condition comprises a determination of whether a power measurement result of the special cell is greater than a third threshold value and that a power measurement result of a target primary secondary cell is lesser than a fourth threshold value.

According to some examples, reporting to the master node comprises: reporting one or more measurements; reporting execution of a cell change by the apparatus.

According to a seventh aspect there is provided a computer program comprising instructions for causing a master node apparatus to perform at least the following: connecting with a user equipment that is in dual connectivity with a master node and a secondary node, wherein the secondary node comprises a primary secondary cell; generating a configuration for the user equipment, the configuration for causing the user equipment to associate a special cell with the primary secondary cell of the secondary node; and receiving a cell reconfiguration complete message from the user equipment.

According to some examples, the master node is a source master node.

According to some examples, the secondary node is a source secondary node.

According to some examples, the computer program comprises instructions for causing the apparatus to perform: generating a cell change execution condition for a target primary secondary cell.

According to some examples, the computer program comprises instructions for causing the apparatus to perform: transmitting a first addition request to a target secondary node, the first addition request for requesting the target secondary node to add the configuration for the user equipment and the cell change execution condition to a first reconfiguration message.

According to some examples, the computer program comprises instructions for causing the apparatus to perform: receiving the first reconfiguration message from the target secondary node, wherein the configuration for the user equipment and the cell change execution condition are embedded in the first reconfiguration message.

According to some examples, the computer program comprises instructions for causing the apparatus to perform: transmitting a second reconfiguration message to the user equipment, wherein the first reconfiguration message is embedded in the second reconfiguration message.

According to some examples, the computer program comprises instructions for causing the apparatus to perform: determining a list of target primary secondary cells for cell change.

According to some examples, the computer program comprises instructions for causing the apparatus to perform: transmitting a secondary node addition request to the secondary node, wherein the secondary node addition request comprises: a preparation request; the list of target primary secondary cells; the configuration for the user equipment; and measurements of primary secondary cells and target primary secondary cells.

According to some examples, the preparation request is for requesting the secondary node to prepare the list of target primary secondary cells with a cell change execution condition.

According to some examples, the computer program comprises instructions for causing the apparatus to perform: determining a cell change execution condition for the list of target primary secondary cells.

According to some examples, the computer program comprises instructions for causing the apparatus to perform: transmitting the determined cell change execution condition to a secondary node.

According to some examples, the computer program comprises instructions for causing the apparatus to perform: receiving a first reconfiguration message from the secondary node, wherein the first reconfiguration message from the secondary node comprises information of target primary secondary cells prepared with a cell change execution condition and the configuration for the user equipment.

According to some examples, the computer program comprises instructions for causing the apparatus to perform: transmitting a second reconfiguration message to the user equipment, wherein the first reconfiguration message from the secondary node is embedded in the second reconfiguration message.

According to some examples, the computer program comprises instructions for causing the apparatus to perform: configuring a cell change execution condition for a target primary secondary cell with an information element associated with secondary nodes.

According to some examples, the computer program comprises instructions for causing the apparatus to perform: embedding the information element and the configuration for the user equipment in a first reconfiguration message received from a target secondary node.

According to some examples, the first reconfiguration message from the target secondary node maps a measurement identification of the information element to a measurement object in the configuration for the user equipment.

According to some examples, the computer program comprises instructions for causing the apparatus to perform: transmitting a second reconfiguration message to the user equipment, wherein the first reconfiguration message is embedded in the second reconfiguration message.

According to some examples, the special cell is defined in a cell change execution condition for a target primary secondary cell.

According to some examples, the cell change execution condition comprises an A3 Event condition or an A5 Event condition.

According to some examples, a determination of an A3 Event condition comprises a determination of whether a power measurement result of the target primary secondary cell is greater by a first predetermined value than a power measurement result of the special cell.

According to some examples, a determination of an A3 Event condition comprises a determination of whether a power measurement result of the target primary secondary cell is lesser by a second predetermined value than a power measurement result of the special cell.

According to some examples, a determination of an A5 Event condition comprises a determination of whether a power measurement result of the special cell is lesser than a first threshold value and that a power measurement result of the target primary secondary cell is greater than a second threshold value.

According to some examples, a determination of an A5 Event condition comprises a determination of whether a power measurement result of the special cell is greater than a third threshold value and that a power measurement result of a target primary secondary cell is lesser than a fourth threshold value.

According to some examples, the first reconfiguration message comprises a secondary node reconfiguration message.

According to some examples, the second reconfiguration message comprises a master node reconfiguration message.

According to some examples, the first reconfiguration message and the second reconfiguration message comprise a Radio Resource Control message.

According to an eighth aspect there is provided a computer program comprising instructions for causing an apparatus to perform at least the following: connecting to a master node and a secondary node in a dual connectivity network, wherein the secondary node comprises a primary secondary cell; receiving, from the master node, a configuration for causing the apparatus to associate a special cell with the primary secondary cell of the secondary node; monitoring a target primary secondary cell for a condition; and, when the condition has been met, reporting to the master node.

According to some examples, the master node is a source master node.

According to some examples, the secondary node is a source secondary node.

According to some examples, the special cell is defined in the condition.

According to some examples, the condition comprises an A3 Event condition or an A5 Event condition.

According to some examples, a determination of an A3 Event condition comprises a determination of whether a power measurement result of the target primary secondary cell is greater by a first predetermined value than a power measurement result of the special cell.

According to some examples, a determination of an A3 Event condition comprises a determination of whether a power measurement result of the target primary secondary cell is lesser by a second predetermined value than a power measurement result of the special cell.

According to some examples, a determination of an A5 Event condition comprises a determination of whether a power measurement result of the special cell is lesser than a first threshold value and that a power measurement result of the target primary secondary cell is greater than a second threshold value.

According to some examples, a determination of an A5 Event condition comprises a determination of whether a power measurement result of the special cell is greater than a third threshold value and that a power measurement result of a target primary secondary cell is lesser than a fourth threshold value.

According to some examples, the computer program comprising instructions for causing the apparatus to perform reporting to the master node comprises: reporting one or more measurements; reporting execution of a cell change by the apparatus.

According to a ninth aspect there is provided a computer program comprising instructions stored thereon for performing at least the following: connecting with a user equipment that is in dual connectivity with a master node and a secondary node, wherein the secondary node comprises a primary secondary cell; generating a configuration for the user equipment, the configuration for causing the user equipment to associate a special cell with the primary secondary cell of the secondary node; and receiving a cell reconfiguration complete message from the user equipment.

According to a tenth aspect there is provided a computer program comprising instructions stored thereon for performing at least the following: connecting to a master node and a secondary node in a dual connectivity network, wherein the secondary node comprises a primary secondary cell; receiving, from the master node, a configuration for causing the apparatus to associate a special cell with the primary secondary cell of the secondary node; monitoring a target primary secondary cell for a condition; and, when the condition has been met, reporting to the master node.

According to an eleventh aspect there is provided a non-transitory computer readable medium comprising program instructions that, when executed by a master node apparatus, cause the apparatus to perform at least the following: connecting with a user equipment that is in dual connectivity with the master node and a secondary node, wherein the secondary node comprises a primary secondary cell; generating a configuration for the user equipment, the configuration for causing the user equipment to associate a special cell with the primary secondary cell of the secondary node; and receiving a cell reconfiguration complete message from the user equipment.

According to a twelfth aspect there is provided a non-transitory computer readable medium comprising program instructions that, when executed by an apparatus, cause the apparatus to perform at least the following: connecting to a master node and a secondary node in a dual connectivity network, wherein the secondary node comprises a primary secondary cell; receiving, from the master node, a configuration for causing the apparatus to associate a special cell with the primary secondary cell of the secondary node; monitoring a target primary secondary cell for a condition; and, when the condition has been met, reporting to the master node.

According to a thirteenth aspect there is provided a non-transitory computer readable medium comprising program instructions stored thereon for performing at least the following: connecting with a user equipment that is in dual connectivity with a master node and a secondary node, wherein the secondary node comprises a primary secondary cell; generating a configuration for the user equipment, the configuration for causing the user equipment to associate a special cell with the primary secondary cell of the secondary node; and receiving a cell reconfiguration complete message from the user equipment.

According to a fourteenth aspect there is provided a non-transitory computer readable medium comprising program instructions stored thereon for performing at least the following: connecting to a master node and a secondary node in a dual connectivity network, wherein the secondary node comprises a primary secondary cell; receiving, from the master node, a configuration for causing the apparatus to associate a special cell with the primary secondary cell of the secondary node; monitoring a target primary secondary cell for a condition; and, when the condition has been met, reporting to the master node.

According to an fifteenth aspect there is provided a computer readable medium comprising program instructions that, when executed by a master node apparatus, cause the apparatus to perform at least the following: connecting with a user equipment that is in dual connectivity with the master node and a secondary node, wherein the secondary node comprises a primary secondary cell; generating a configuration for the user equipment, the configuration for causing the user equipment to associate a special cell with the primary secondary cell of the secondary node; and receiving a cell reconfiguration complete message from the user equipment.

According to a sixteenth aspect there is provided a computer readable medium comprising program instructions that, when executed by an apparatus, cause the apparatus to perform at least the following: connecting to a master node and a secondary node in a dual connectivity network, wherein the secondary node comprises a primary secondary cell; receiving, from the master node, a configuration for causing the apparatus to associate a special cell with the primary secondary cell of the secondary node; monitoring a target primary secondary cell for a condition; and, when the condition has been met, reporting to the master node.

According to a seventeenth aspect there is provided a computer readable medium comprising program instructions stored thereon for performing at least the following: connecting with a user equipment that is in dual connectivity with a master node and a secondary node, wherein the secondary node comprises a primary secondary cell; generating a configuration for the user equipment, the configuration for causing the user equipment to associate a special cell with the primary secondary cell of the secondary node; and receiving a cell reconfiguration complete message from the user equipment.

According to a eighteenth aspect there is provided a computer readable medium comprising program instructions stored thereon for performing at least the following: connecting to a master node and a secondary node in a dual connectivity network, wherein the secondary node comprises a primary secondary cell; receiving, from the master node, a configuration for causing the apparatus to associate a special cell with the primary secondary cell of the secondary node; monitoring a target primary secondary cell for a condition; and, when the condition has been met, reporting to the master node.

### DESCRIPTION OF FIGURES

Embodiments will now be described, by way of example only, with reference to the accompanying Figures in which:
Figure 1 shows a representation of a network system according to some example embodiments;
Figure 2 shows an example of a network system according to some example embodiments;
Figure 3 is a signalling diagram according to an example embodiment;
Figure 4 is a signalling diagram according to an example embodiment;
Figure 5 is a signalling diagram according to an example embodiment;
Figure 6 is a signalling diagram according to an example embodiment;
Figure 7 shows a schematic representation of a control apparatus according to some example embodiments;
Figure 8 shows a schematic representation of an apparatus according to some example embodiments;
Figure 9 is a flow chart of a method according to an example embodiment;
Figure 10 is a flow chart of a method according to an example embodiment;
Figure 11 shows a schematic representation of a non-volatile memory medium storing instructions which when executed by a processor allow a processor to perform one or more of the steps of the methods of some embodiments.

### DETAILED DESCRIPTION

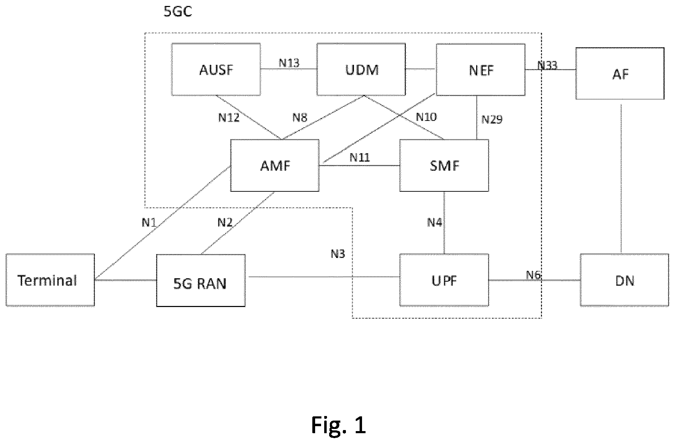

In the following, certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figure 1 to assist in understanding the technology underlying the described examples.

Figure 1 shows a schematic representation of a 5G system (5GS), which is provided by way of example of a communication system. The 5GS may comprise a terminal or user equipment (UE), a 5G radio access network (5GRAN) or next generation radio access network (NG-RAN), a 5G core network (5GC), one or more application function (AF) and one or more data networks.

The 5G-RAN may comprise one or more gNodeB (gNB) or one or more gNodeB (gNB) distributed unit functions connected to one or more gNodeB (gNB) centralized unit functions.

The 5GC may comprise the following entities: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF). Figure 1 also shows the various interfaces (N1, N2 etc.) that may be implemented between the various elements of the system.

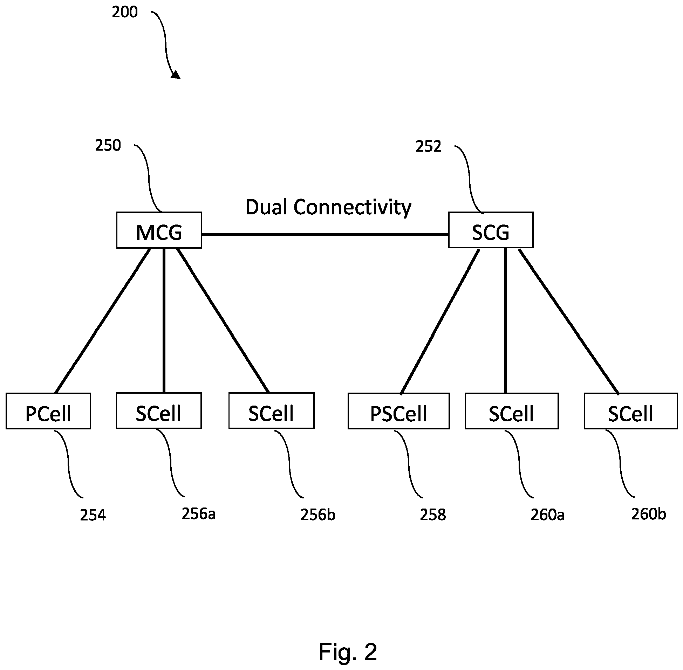

Figure 2 shows a system 200 in which some examples may be performed. System 200 comprises Master Cell Group (MCG) 250 and a Secondary Cell Group (SCG) 252. System 200 may also comprise other SCGs, each having a PSCell. Each of the of other SCGs may also have one or more SCells.

MCG 250 comprises a Primary Cell (PCell) 254. PCell 254 may be used to initiate initial access for a UE. MCG 250 may also comprise other cells comprising at least one Secondary Cell (SCell) 256a and 256b.

MCG 250 may be controlled by a Master Node (MN).

MCG 250 is connected to SCG 252 by a Dual Connectivity (DC) system. SCG 252 comprises a Primary Secondary Cell (PSCell) 258 which may be used as a cell for which initial access is initiated for SCG 252. SCG 252 may also comprise other cells comprising at least one Secondary Cell (SCell) 260a and 260b.

SCG 252 may be controlled by a Secondary Node (SN). Each SCG in system 200 may comprise a SN.

A UE can be in dual connectivity with a MN (wherein the MN may comprise a PCell) and a SN (wherein the SN may comprise a PSCell). Therefore, a UE in dual connectivity with a MN and SN may be configured with a corresponding PCell and PSCell. The MN or SN can initiate a Conditional Primary Secondary Cell Change (CPC) procedure.

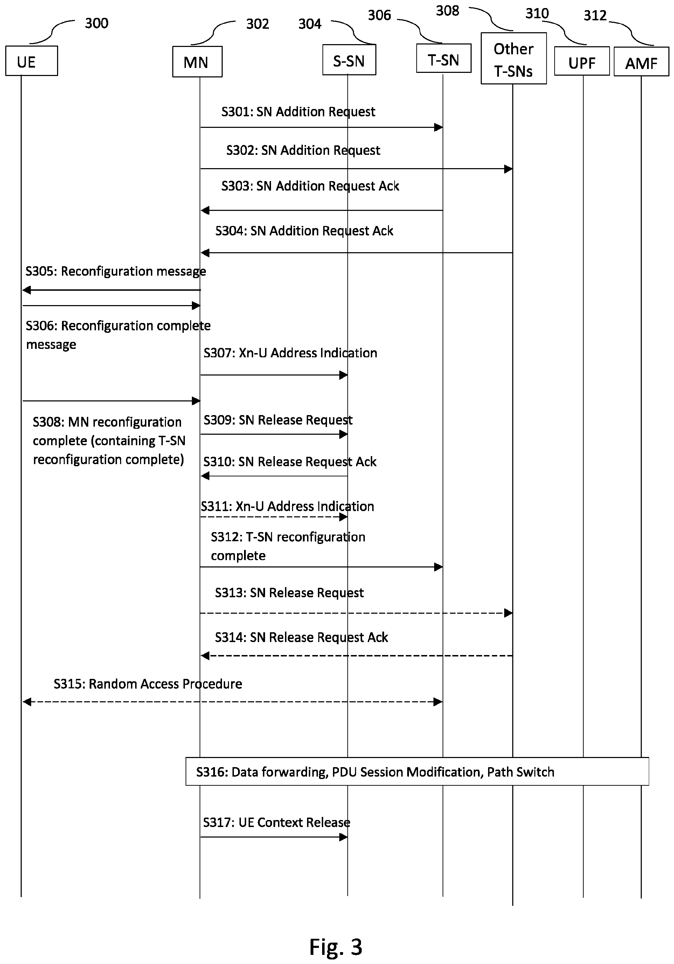

A MN-initiated CPC procedure is shown in Fig. 3, as per 3GPP TS37.340. Fig. 3 shows a UE 300 that is in dual connectivity with a MN 302 and Source SN (S-SN) 304.

At S301 and S302 of the procedure the MN 302 transmits a SN Addition Request message to one or more Target SNs (T-SNs) 306, 308. In some examples, the SN Addition Request message is for requesting the T-SNs 306, 308 to prepare the PSCells of the T-SNs with CPC.

At S303 and S304, the T-SNs 306, 308 transmit a SN Addition Request Acknowledge message to the MN 302. In some examples, the SN Addition Request Acknowledge message provides the MN 302 with information of the T-SN PSCells prepared with CPC and a CPC configuration. In some examples, the configuration is used by the UE 300 to change its association from a PSCell of the S-SN 304 to a PSCell of a T-SN prepared with CPC. In some examples, the CPC configuration is sent in a T-SN reconfiguration message.

At S305, the MN 302 transmits a reconfiguration message to the UE 300. In some examples, the reconfiguration message comprises a MN reconfiguration message with CPC execution conditions. CPC execution conditions may be conditions used by the UE to determine whether to execute PSCell change (as explained in further detail below). Further, the reconfiguration message may comprise at least one T-SN reconfiguration message embedded in the MN reconfiguration message, wherein the T-SN reconfiguration message comprises information of the T-SN PSCells prepared with CPC and the CPC configuration.

At S306, the UE 300 applies the received reconfiguration message and stores the CPC configuration received in the at least one T-SN reconfiguration message (embedded in the MN reconfiguration message). The UE 300 transmits a reconfiguration complete message to the MN 302.

At S307, upon receiving the reconfiguration complete message from the UE 300, the MN 302 informs the S-SN 304, via a Xn-U Address Indication procedure, that CPC has been configured in the UE 300. In some examples, if applicable, upon receipt of the indication that CPC has been configured in the UE 300, the S-SN 304 will decide whether to perform early data forwarding, via an Early Status Transfer Procedure. In some examples, a purpose of the Early Status Transfer Procedure is to transfer the COUNT of the first downlink Service Data Unit that the S-SN 304 forwards to the T-SN 306. In some examples, a purpose of the Early Status Transfer Procedure is to transfer a COUNT for discarding already forwarded downlink Service Data Units from the S-SN 304 to the T-SN 306.

At S308, the UE 300 evaluates the execution conditions received in the MN reconfiguration message. If a T-SN PSCell satisfies the execution condition, the UE 300 applies the MN reconfiguration message corresponding to that selected T-SN PSCell and sends an MN reconfiguration complete message to the MN 302. Further, the MN reconfiguration complete message comprises a T-SN reconfiguration complete message, wherein the T-SN reconfiguration complete message comprises information enabling the MN to identify the T-SN 306 of the selected T-SN PSCell.

At S309, the MN 302 transmits a SN Release Request message to the S-SN 304, which informs the S-SN 304 to stop providing user data to the UE 300.

At S310, the S-SN 304 transmits a SN Release Request Acknowledge message to the MN 300.

At S311, the MN 302 may transmit a Xn-U Address Indication message to the S-SN 304.

At S312, if the reconfiguration complete procedure is successful, the MN 302 transmits the T-SN reconfiguration complete message to the T-SN 306 of the selected T-SN PSCell.

At S313, the MN 302 may transmit a SN Release Request message(s) to other T-SNs 308, to cancel CPC in the prepared PSCells of the other T-SN 308.

At S314, the other T-SNs 308 may transmit a SN Release Request Acknowledgement message to the MN 302.

At S315, the UE 300 may synchronize to the selected T-SN PSCell. The UE may synchronize via a Random Access Procedure. In some examples, a UE synchronising to the selected T-SN PSCell comprises a UE connecting to the selected T-SN PSCell.

At S316, data forwarding, PDU Session Modification and Path Switch are performed between the MN 302, S-SN 304, T-SN 306, UPF 310 and AMF 312.

At S317, the MN 302 transmits a UE Context Release message to the S-SN 304. The UE Context Release message informs the S-SN 304 to release radio and C-plane related resources associated to the UE context, however, any ongoing data forwarding may continue.

In some examples, the reconfiguration message, MN reconfiguration message, T-SN reconfiguration message, reconfiguration complete message, and T-SN reconfiguration complete message may be a Radio Resource Control (RRC) reconfiguration message.

Measurement report triggering conditions may be used for triggering measurement reports to a network or for triggering execution of conditional configuration (e.g., for conditional handover (CHO) or CPC).

Measurement report triggering conditions include "Event A3" and "Event A5" conditions. "Event A3" and "Event A5" conditions comprise entering conditions and leaving conditions. The entering condition may be considered a condition whereby if satisfied, an event will be triggered. For example, for CPC, if the entering condition is satisfied, conditional PSCell change is triggered by a UE. The leaving condition may be considered a condition whereby if satisfied, the triggering of an event will be cancelled. For example, for CPC, if the leaving condition is satisfied, conditional PSCell change will be cancelled by the UE.

In some examples, the entering condition for an A3 Event condition is satisfied when the following inequality is satisfied:

*Mn + Ofn + Ocn* - *Hys > Mp + Ofp + Ocp + Off*

In some examples, the leaving condition for an A3 Event condition is satisfied when the following inequality is satisfied:

*Mn + Ofn + Ocn + Hys < Mp + Ofp + Ocp + Off*

In some examples, the entering conditions for an A5 Event condition is satisfied when both of the following inequalities are satisfied:

*Mp + Hys < Thresh 1*

*Mn + Ofn + Ocn* - *Hys > Thresh2*

In some examples, the leaving condition for an A5 Event condition is satisfied when both of the following inequalities are satisfied:

*Mp* - *Hys > Thresh 1*

*Mn + Ofn* + *Ocn + Hys < Thresh2*

The *Mn* parameter is the power measurement result of a target cell, not considering any offsets. In some examples, a target cell may be a target PCell or a target PSCell. The *Ofn* parameter is the measurement object specific offset of the reference signal of the target cell. For example, the *Ofn* parameter is the offset measurement object defined within the measurement object corresponding to the target cell. The *Ocn* parameter is the cell specific offset of the target cell, defined within the measurement object corresponding to the frequency of the target cell, and set to zero if not configured for the target cell.

The *Mp* parameter is the power measurement result of a special cell (SpCell), not considering any offsets. In some examples, a special cell is a PCell of a MN or a PSCell of a SN. The *Ofp* parameter is the measurement object specific offset of the SpCell For example, the *Ofp* parameter is the offset measurement object defined within the measurement object corresponding to the SpCell. The *Ocp* parameter is the cell specific offset of the SpCell, defined within the measurement object corresponding to the SpCell, and is set to zero if not configured for the SpCell.

The *Hys* parameter is the hysteresis parameter for the event. For example, the hysteresis defined within the report configuration for the event. The *Off* parameter is the offset parameter for the event. For example, an A3 Offset may be defined within a report configuration for an A3 Event.

The *Mn* and *Mp* parameters may be expressed in dBm in case of Reference Signal Received Power (RSRP), or in dB in case of Reference Signal Received Quality (RSRQ) and Reference Signal Signal-to-Noise and Interference Ratio (RS-SINR). The *Ofn, Ocn, Ofp, Ocp, Hys* and *Off* parameters may be expressed in dB.

The *Thresh1* parameter is a threshold parameter for the event. For example, an A5 Threshold1 may be defined within a report configuration for an A5 Event. The *Thresh1* parameter is expressed in the same unit as the *Mp* parameter. In some examples, the *Mp* parameter may be expressed in dBm in case of Reference Signal Received Power (RSRP), or in dB in case of Reference Signal Received Quality (RSRQ) and Reference Signal Signal-to-Noise and Interference Ratio (RS-SINR).

The *Thresh2* parameter is the threshold parameter for the event. For example, an A5 Threshold2 may be defined within a report configuration for an A5 Event. The *Thresh2* parameter is expressed in the same unit as the *Mn* parameter. In some examples, the *Mn* parameter may be expressed in dBm in case of Reference Signal Received Power (RSRP), or in dB in case of Reference Signal Received Quality (RSRQ) and Reference Signal Signal-to-Noise and Interference Ratio (RS-SINR).

In some examples, the definition of an Event A3 condition also applies to a Conditional Event A3 condition. In some examples, the definition of an Event A5 condition also applies to a Conditional Event A5 condition.

In some examples, the measurement report triggering conditions for CPC are CPC execution conditions. CPC execution conditions may comprise Event A3 conditions and/or Event A5 conditions. If the CPC execution condition comprises an A3 Event condition, using the A3 entering and leaving conditions as defined above, the UE will determine whether a power measurement result of a target PSCell is greater by a first predetermined value than a power measurement result of the SpCell (i.e., the A3 entering condition) and/or determine whether a power measurement result of the target PSCell is lesser by a second predetermined value than a power measurement result of the special cell (i.e., the A3 leaving condition). If the CPC execution condition comprises an A5 Event condition, using the A5 entering and leaving conditions as defined above, the UE will determine whether a power measurement result of the SpCell is lesser than a first threshold value and that a power measurement result of the target PSCell is greater than a second threshold value (i.e., A5 entering condition) and/or determine whether a power measurement result of the SpCell is greater than a third threshold value and that a power measurement result of a target PSCell is lesser than a fourth threshold value (i.e., A5 leaving condition). The SpCell may be a PCell of a MN or a PSCell of a SN.

When a UE is in dual connectivity with a MN and S-SN, the UE may receive two independent measurement configurations. For example, the measurement configurations may be needed for a UE to execute CPC. A measurement configuration generated by a MN and associated with a MCG, for example a PCell, may be included in a MN reconfiguration message from the MN to the UE. A measurement configuration generated by a SN and associated with a SCG, for example a PSCell, may be included in a SN reconfiguration message from the SN to the UE, or may be included in a SN reconfiguration message embedded in a MN reconfiguration message.

If a UE receives A3 and/or A5 conditions, the UE will determine the SpCell as a PCell is the measurement configuration is generated by the MN and a PSCell if the measurement configuration is generated by the S-SN.

The UE may be configured with conditional reconfiguration using a "*CondReconfigToAddModList"* information element (IE). This list provides a list of the configuration of candidate SpCells to be added or modified for CHO, CPA (Conditional PSCell Addition) or CPC. The *CondReconfigToAddModList* IE comprises a "*CondReconfigToAddMod"* IE. The field of the *CondReconfigToAddMod* IE may include a *"condReconfigld'* IE; *"condExecutionCond'* IE; *"condExecutionCondSCG"* IE; "*condRRCReconfig"* IE. The *condExecutionCond* IE comprises the execution condition that needs to be fulfilled in order to trigger the execution of a conditional reconfiguration for CHO; CPA; intra-SN CPC without MN involvement or MN initiated inter-SN CPC. In some examples, intra-SN CPC comprises CPC where the source PSCell and target PSCell are associated with the same SN. In some examples, inter-SN CPC comprises CPC where the source PSCell and target PSCell are associated with different SNs. The *condExecutionCondSCG* IE contains an execution condition that needs to be fulfilled in order to trigger the execution of a conditional reconfiguration for SN initiated inter-SN CPC. The *condExecutionCondSCG* IE comprises a measurement identification, which refers to the measurement configuration associated with the SCG. For each *condReconfigld* IE , the network always configures either a *condExecutionCond* IE or a *condExecutionCondSCG* IE (not both). The *condRRCReconfig* IE comprises the RRCReconfiguration message to be applied when the condition(s) are fulfilled. The reconfiguration message does not contain the field conditional reconfiguration or the field daps-Config.

For example, the measurement identification of the condition that needs to be monitored for triggering the execution is provided either in *condExecutionCond* IE or *condExecutionCondSCG* IE (comprised in the *CondReconfigToAddMod* IE). In examples, the *condExecutionCond* IE is used if the conditional configuration comprises, for example, CHO; CPA; intra-SN CPC without MN involvement; MN initiated inter-SN CPC. In some examples, the *condExecutionCondSCG* IE is used if the conditional configuration comprises SN initiated inter-SN CPC. The RRC configuration that needs to be applied during execution of the conditional configuration is given to the UE via *condRRCReconfig* IE.

One problem of current MN-initiated CPC procedures is that in either MN initiated intra-SN CPC or MN initiated inter-SN CPC, the MN is not able to configure a CPC condition with an A3 or A5 event which refers to the PSCell of the S-SN as a SpCell in those events. In this case, if the MN uses an A3 Event condition to compare a PSCell RSRP of a S-SN against any target PSCell, the UE will compare a PCell of the MN against the target PSCells. Similarly, if the MN uses an A5 Event condition to compare a PSCell RSRP of a S-SN against a threshold, the UE will compare the PCell of the MN against the threshold.

3GPP R2-2109873 provides a method where a UE uses a PSCell in A3/A5 Event conditions if it identifies that the target candidate is an SCG cell. Further, 3GPP R2-21 09873 provides a method wherein a flag is added to indicate the usage of PSCell However, both methods require changes in the UE implementation.

3GPP R2-2007679 considers CPA and CPC. For CPA, it is discussed that the MN is not allowed to alter any content related to target PSCell configuration provided by a T-SN and should use the content as part of CPA configurations. The MN may configure execution conditions for conditional SN addition since they are available at the MN. CPA, where there is no PSCell of a S-SN, is addressed hence no A3 or A5 Event conditions are configurable regarding the PSCell of a S-SN as a SpCell in those conditions. Therefore, this method does not remedy A3/A5 configuration in a CPC scenario. For CPC, it is discussed that the execution condition should be decided by the source SN since the source SN maintains the measurement configuration. 3GPP R2-2007679 provides that A3/A5 execution conditions can be adopted from conditional intra-SN without MN involvement for SN initiated inter-SN CPC. Therefore, the procedure only targets a SN-initiated procedure. It proposes to inherit the A3/A5 conditions of SN initiated A3/A5 Event conditions. This does not address issues with MN initiated CPC scenarios, where it is not possible to obtain a measurement configuration prepared by a S-SN.

3GPP R2-2010734 provides a CPC configuration for SN-initiated inter-SN CPC. In the given procedure, the S-SN initiates a CPC preparation and determines a CPC condition. The S-SN sends the CPC condition to the MN, and once the MN completes the preparations of the T-SNs on behalf of S-SN, the source MN embeds the S-SNs CPC condition into the RRC message, before sending it to the UE. It is further discussed that instead of the MN storing the execution conditions, it would be simpler for the MN to forward all information to each target SN, as prepared by the source SN. Then the target SN can provide the execution condition and configuration for each target PSCell back to the MN. However, the method described in 3GPP R2-2010734 is for SN-initiated CPC rather than an MN initiated CPC, where the measurement configuration is MN-originated. Further, it is proposed in 3GPP R2-2010734 that the S-SN generates a CPC condition, and the MN forwards the CPC conditions to the target SNs. However, in the present disclosure, the CPC condition may be generated by the MN or the MN sends its own CPC condition, rather than forwarding a S-SN's CPC condition.

The present disclosure provides three independent concepts (Concept 1, 2 and 3) for MN-initiated CPC. In examples, the MN generates CPC execution conditions using A3 or A5 Event conditions, and configures the UE in a way such that the UE will evaluate those conditions, considering the SpCell as a PSCell. Some examples of the proposed concepts are network-based, and do not require any changes in the UE implementation.

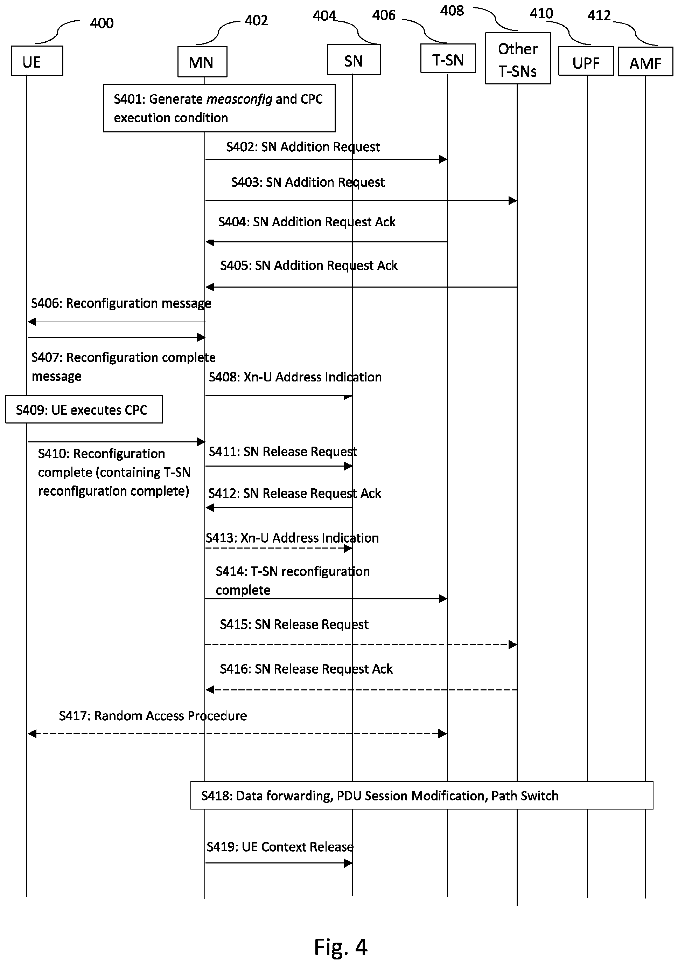

Figure 4 shows a sequence diagram of the MN initiated CPC procedure for Concept 1. Concept 1 considers a UE 400 in dual connectivity with a MN 402 and SN 404. In some examples, the MN 402 may be a S-MN and the SN 404 may be a S-SN.

At S401, the MN 402 generates a measurement configuration and a CPC execution condition for a target PSCell. In some examples, the measurement configuration is for the UE 400 to execute CPC. In some examples, the CPC execution condition comprises an A3 Event condition or an A5 Event conditions.

At S402 and S403, the MN 402 transmits a SN Addition Request message to one or more T-SNs 406, 408. In some examples, the SN Addition Request message is for requesting the one or more T-SNs 406, 408 to prepare the PSCells of the one or more T-SNs 406, 408 with CPC. In some further examples, the SN Addition Request message is for requesting the one or more T-SNs 406, 408 to add the measurement configuration and the CPC execution condition generated by the MN 402 to a T-SN reconfiguration message of the one or more T-SNs 406, 408.

At S404 and S405, the one or more T-SNs 406, 408 transmit a SN Addition Request Acknowledgement message to the MN 402. In some examples, the SN Addition Request Acknowledgement message comprises a T-SN reconfiguration message of the one or more T-SNs. In some examples, the T-SN reconfiguration message comprises information of the T-SN PSCell prepared with CPC. In some examples, the measurement configuration and the CPC execution condition (generated by the MN 402) are embedded in the T-SN reconfiguration message of the one or more T-SNs 406, 408.

At S406, the MN 402 transmits a reconfiguration message to the UE 400. In some examples, the reconfiguration message comprises a MN reconfiguration message. In some examples, the T-SN reconfiguration message of the one or more T-SNs 406, 408 is embedded in the MN reconfiguration message.

At S407, the UE applies the reconfiguration message and stores the measurement configuration (generated by the MN 400) embedded in the T-SN reconfiguration message of one or more T-SNs 406, 408. The UE 400 transmits a reconfiguration complete message to the MN 402.

At S408, upon receiving the reconfiguration complete message from the UE 400, the MN 402 informs the SN 404, via a Xn-U Address Indication procedure, that CPC has been configured in the UE 400. In some examples, if applicable, upon receipt of the indication that CPC has been configured in the UE 400, the SN 404 will decide whether to perform early data forwarding, via an Early Status Transfer Procedure.

At S409, the UE 400 evaluates the CPC execution condition generated by the MN 402 (now embedded in the T-SN reconfiguration message of the one or more T-SNs 406, 408). In some examples, the CPC execution condition comprises an A3 Event condition or an A5 Event condition. In some examples, the UE 400 evaluates the SpCell as defined in A3/A5 Event conditions as a PSCell of the SN 404.

At S410, if a T-SN PSCell prepared with CPC satisfies the CPC execution condition, the UE 400 applies the reconfiguration message corresponding to that selected T-SN PSCell and sends a reconfiguration complete message to the MN 402. The reconfiguration complete message may comprise a T-SN reconfiguration complete message, wherein the T-SN reconfiguration complete message comprises information enabling the MN 402 to identify the T-SN 406 of the selected T-SN PSCell.

At 411, the MN 402 transmits a SN Release Request message to the SN, which informs the SN 404 to stop providing user data to the UE 400.

At S412, the SN 404 transmits a SN Release Request Acknowledge message to the MN 400.

At S413, the MN 400 may transmit a Xn-U Address Indication message to the SN 404.

At S414, if the reconfiguration complete procedure is successful, the MN 400 transmits the T-SN reconfiguration complete message to the T-SN 406 of the selected T-SN PSCell.

At S415, the MN 400 may transmit one or more T-SN Release Request messages to the other, non-selected, one or more T-SNs 408, to cancel CPC in the prepared PSCells of the other one or more T-SNs 408.

At S416, the other one or more T-SNs 408 may transmit a T-SN Release Request Acknowledgement message to the MN 402.

At S417, the UE 400 may synchronize to the selected T-SN PSCell. In some examples, the UE 400 may synchronize via a Random Access Procedure.

At S418, data forwarding, PDU Session Modification and Path Switch are performed between the MN 402, SN 404, T-SN 406, UPF 410 and AMF 412.

At S419, the MN 402 transmits a UE Context Release message to the SN 404. The UE Context Release message informs the SN 404 to release radio and C-plane related resources associated to the UE context; however, any ongoing data forwarding may continue.

In some examples, the reconfiguration message, MN reconfiguration message, T-SN reconfiguration message, reconfiguration complete message and T-SN reconfiguration complete message may be a Radio Resource Control (RRC) reconfiguration message.

As the measurement configuration and CPC execution condition are generated by the MN, Concept 1 considers MN-initiated CPC. As the measurement configuration and CPC execution condition (generated by the MN) are embedded in the T-SN reconfiguration message, the UE is able to determine the SpCell (defined in A3/A5 Event conditions) as a PSCell. Therefore, Concept 1 enables a solution for MN initiated CPC where the MN configures the UE in such a way that the UE will evaluate A3/A5 Event conditions, considering the SpCell as a PSCell.

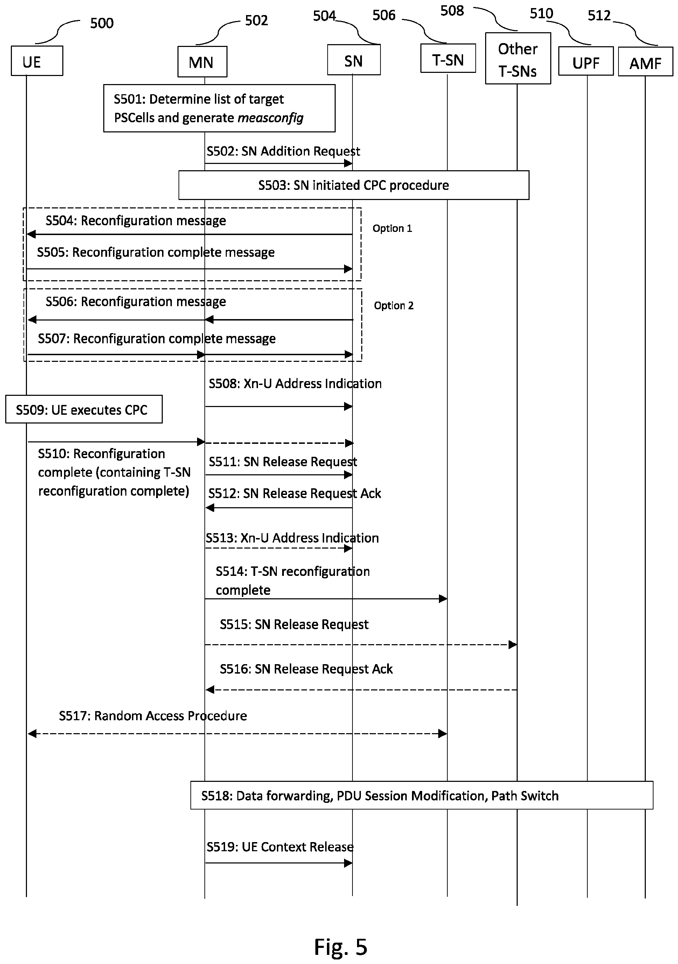

Figure 5 shows a sequence diagram of the MN initiated CPC procedure for Concept 2. Concept 2 considers a UE 500 in dual connectivity with a MN 502 and SN 504 and provides information to a SN 504 so that the SN 504 handles the CPC preparation procedure. In some examples, the MN 502 may be a S-MN and the SN 504 may be a S-SN.

At S501, the MN 502 determines a list of target PSCells for CPC and generates a measurement configuration for the UE 500 to execute CPC. In some examples, the MN 502 may determine the CPC execution condition for the list of target PSCells. In some examples, the CPC execution condition comprises an A3 Event condition or an A5 Event condition.

At S502, the MN 502 transmits a SN Addition Request message to the SN 504. In some examples, the SN Addition Request message comprises: a preparation request; the list of target PSCells; the measurement configuration; measurements of the SN PSCell and target PSCells. In some examples, the measurements of the SN PSCell and target PSCells are L3 filtered measurements of the reference signal received power (RSRP); reference signal received quality (RSRQ); signal-to-interference and noise ratio (SINR). Measurements of RSRP, RSRQ or SINR may be derived from reference signal measurements, for example synchronization signal block (SSB) beam measurements or channel state information reference signal (CSI-RS) beam measurements that are first filtered via L1 measurements and then filtered via a recursive filter (i.e., a L3 filter). In some examples, the preparation request is for requesting the SN 504 to prepare the list of target PSCells with a CPC execution condition. In some examples, if the MN 502 determines the CPC execution condition for the list of target PSCells, the MN 502 may transmit the determined CPC execution condition to the SN 504.

At S503, the SN 504 proceeds with a SN-initiated CPC procedure. In some examples, the SN 504 transmits a SN Change Required message the MN 502. The MN 502 transmits a SN Addition Request to one or more T-SNs associated with the list of target PSCells requested by the MN 502. In some examples, the SN Addition Request is for requesting the one or more T-SNs 506, 508 to prepare the PSCells of the one or more T-SNs with CPC. In some examples, the one or more T-SNs 506, 508 transmit a SN Addition Request Acknowledgement message to the MN 502. In some examples, the SN Addition Request Acknowledgement message comprises a T-SN reconfiguration message. In some examples, the T-SN reconfiguration message of the one or more T-SNs 506, 508 comprises information of the T-SN PSCell prepared with CPC. In some examples, the MN 502 transmits a SN Modification Request to the SN 504. In some examples the SN Modification Request comprises the T-SN reconfiguration message. In some examples, the SN 504 configures the prepared T-SN PSCells with a CPC execution condition.

At S504 and S506, the SN 504 may send a reconfiguration message directly to the UE 500 (Option 1). In this case, the reconfiguration message may be a SN reconfiguration message. Alternatively, the SN 504 may send a reconfiguration message to the UE 500, via the MN 502 (Option 2). In this case, the reconfiguration message may be a MN reconfiguration message, wherein the SN reconfiguration is embedded in the MN reconfiguration message. In both cases, the SN reconfiguration message comprises the measurement configuration generated by the MN 502 and information of the prepared T-SN PSCells requested by the MN 502, wherein the T-SN PSCells are configured with a CPC execution condition. In some examples, the T-SN reconfiguration message is embedded in the SN reconfiguration message.

At S505 and S507, the UE 500 applies the reconfiguration message and stores the measurement configuration (generated by the MN 502 and embedded in the SN reconfiguration message). The UE transmits a reconfiguration complete message to the MN 502.

At S508, upon receiving the reconfiguration complete message from the UE 500, the MN 502 informs the SN 504, via a Xn-U Address Indication procedure, that CPC has been configured in the UE 500. In some examples, if applicable, upon receipt of the indication that CPC has been configured in the UE 500, the SN 504 will decide whether to perform early data forwarding, via an Early Status Transfer Procedure.

At S509, the UE 500 evaluates the T-SN PSCells configured with a CPC execution condition (embedded in the SN reconfiguration message). In some examples, the CPC execution condition configured with T-SN PSCells comprises an A3 Event condition or an A5 Event condition. In some examples, the UE 500 evaluates the SpCell as defined in A3/A5 Event conditions as a PSCell of the SN 504.

At S510, if a T-SN PSCell configured with the CPC execution condition satisfies the CPC execution condition, the UE 500 applies the reconfiguration message corresponding to that selected T-SN PSCell. In some examples, the UE 500 sends a MN reconfiguration complete message to the MN 502. In some examples, the UE 500 sends a SN reconfiguration complete message to the SN 504. In some examples, the MN reconfiguration complete message comprises a T-SN reconfiguration complete message, wherein the T-SN reconfiguration complete message comprises information enabling the MN 502 to identify the T-SN 506 of the selected T-SN PSCell.

At S511, the MN 502 transmits a SN Release Request message to the SN 504 which informs the SN 504 to stop providing user data to the UE 500.

At S512, the SN 504 transmits a SN Release Request Acknowledge message to the MN 500.

At S513, the MN 502 may transmit a Xn-U Address Indication message to the SN 504.

At S514, if the reconfiguration complete procedure is successful, the MN 502 transmits the T-SN reconfiguration complete message to the T-SN 506 of the selected T-SN PSCell.

At S515, the MN 502 may transmit one or more T-SN Release Request messages to the other, non-selected, one or more T-SNs 508, to cancel CPC in the prepared PSCells of the other one or more T-SN 508.

At S516, the other one or more T-SNs 508 may transmit a T-SN Release Request Acknowledgement message to the MN 502.

At S517, the UE 500 may synchronize to the selected T-SN PSCell. In some examples, the UE 500 may synchronize via a Random Access Procedure.

At S518, data forwarding, PDU Session Modification and Path Switch are performed between the MN, SN, T-SN, UPF and AMF.

At S519, the MN 502 transmits a UE Context Release message to the SN. The UE Context Release message informs the SN 504 to release radio and C-plane related resources associated to the UE context, however, any ongoing data forwarding may continue.

In some examples, the reconfiguration message, MN reconfiguration message, SN reconfiguration message, reconfiguration complete message, MN reconfiguration complete message, SN reconfiguration complete message and T-SN reconfiguration complete may be a Radio Resource Control (RRC) reconfiguration message.

As the measurement configuration for CPC execution is generated by the MN, and as the SN configures target PSCells with CPC conditions, as requested by the MN, Solution 2 considers MN-initiated CPC. As the measurement configuration is embedded in the SN reconfiguration message, the UE is able to determine the SpCell (defined in A3/A5 Event conditions) as a PSCell. Therefore, Solution 2 enables a solution for MN initiated CPC where the MN configures the UE in such a way that the UE will evaluate A3/A5 Event conditions, considering the SpCell as a PSCell.

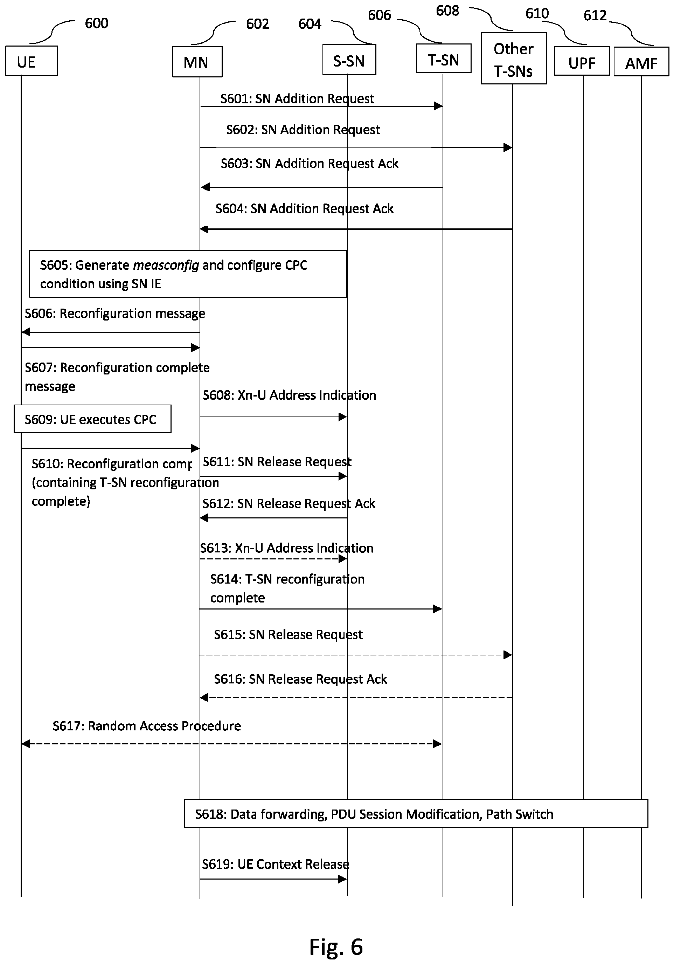

Figure 6 shows a sequence diagram of the MN initiated CPC procedure for Solution 3. Solution 3 considers a UE 600 in dual connectivity with a MN 602 and SN 604. In some examples, the MN 602 may be a S-MN and the SN 604 may be a S-SN.

At S601 and S602, the MN 602 transmits a SN Addition Request message to one or more T-SNs 606, 608. In some examples, the SN Addition Request message is for requesting the T-SNs 606, 608 to prepare the PSCells of the T-SNs with CPC.

At S603 and S604, the T-SNs transmit a SN Addition Request Acknowledge message to the MN 602. In some examples, the SN Addition Request Acknowledge message comprises a T-SN reconfiguration message and provides the MN 602 with information of the T-SN PSCells prepared with CPC.

At S605, the MN 602 generates a measurement configuration for the UE 600 to use when executing CPC. The MN 602 configures a CPC execution condition using an information element associated with SNs. For example, the information element comprises a *condExecutionCondSCG* IE rather than a *condExecutionCond* IE . In some examples, the CPC execution condition comprises an A3/A5 Event condition. The MN 602 embeds the information element and measurement configuration in the T-SN reconfiguration messages of the one or more T-SNs 606, 608. In some examples, the T-SN reconfiguration messages map a measurement identification of the information element to a measurement object in the measurement configuration.

At S606, the MN 602 transmits a reconfiguration message to the UE 600. In some examples the reconfiguration message comprises a MN reconfiguration message. In some examples, the T-SN reconfiguration message of the one or more T-SNs is embedded in the MN reconfiguration message.

At S607, the UE 600 applies the reconfiguration message and stores the measurement configuration (generated by the MN 602) embedded in the T-SN reconfiguration message of one or more T-SNs 606, 608. The UE 600 transmits a reconfiguration complete message to the MN 602.

At S608, upon receiving the reconfiguration complete message from the UE 600, the MN 602 informs the SN 604, via a Xn-U Address Indication procedure, that CPC has been configured in the UE 600. In some examples, if applicable, upon receipt of the indication that CPC has been configured in the UE 600, the SN 604 will decide whether to perform early data forwarding, via an Early Status Transfer Procedure.

At S609, the UE 600 evaluates the CPC execution condition configured (by the MN 602) with an information element associated with SNs. In some examples, the CPC execution condition comprises an A3 Event condition or an A5 Event condition. In some examples, the UE 600 evaluates the SpCell as defined in A3/A5 Event conditions as a PSCell of the SN 602.

At S610, if a T-SN PSCell prepared with CPC satisfies the CPC execution condition, the UE 600 applies the reconfiguration message corresponding to that selected T-SN PSCell and sends a reconfiguration complete message to the MN 602. The reconfiguration complete message may comprise a T-SN reconfiguration complete message, wherein the T-SN reconfiguration complete message comprises information enabling the MN 602 to identify the T-SN 606 of the selected T-SN PSCell.

At 611, the MN 602 transmits a SN Release Request message to the SN 604 which informs the SN 604 to stop providing user data to the UE 600.

At S612, the SN 604 transmits a SN Release Request Acknowledge message to the MN 602.

At S613, the MN 602 may transmit a Xn-U Address Indication message to the SN 604.

At S614, if the reconfiguration complete procedure is successful, the MN 602 transmits the T-SN reconfiguration complete message to the T-SN 606 of the selected T-SN PSCell.

At S615, the MN 602 may transmit one or more T-SN Release Request messages to the other, non-selected, one or more T-SNs 608, to cancel CPC in the prepared PSCells of the other one or more T-SNs 608.

At S616, the other one or more T-SNs 608 may transmit a T-SN Release Request Acknowledgement message to the MN 604.

At S617, the UE 600 may synchronize to the selected T-SN PSCell. In some examples, the UE 600 may synchronize via a Random Access Procedure.

At S618, data forwarding, PDU Session Modification and Path Switch are performed between the MN 602, SN 604, T-SN 606, UPF 610 and AMF 612.

At S619, the MN 602 transmits a UE Context Release message to the SN 604. The UE Context Release message informs the SN 604 to release radio and C-plane related resources associated to the UE context, however, any ongoing data forwarding may continue.

In some examples, the reconfiguration message, MN reconfiguration message, T-SN reconfiguration message, reconfiguration complete message, MN reconfiguration complete message and T-SN reconfiguration complete message may be a Radio Resource Control (RRC) reconfiguration message.

As the measurement configuration is generated by the MN and as the MN configures the CPC condition execution condition in an information element associated with SNs, Concept 3 considers MN-initiated CPC. As the measurement configuration is embedded in the T-SN reconfiguration message and the CPC execution conditions are configured in an information element associated with SNs, the UE is able to determine the SpCell (defined in A3/A5 Event conditions) as a PSCell. Therefore, Concept 3 enables MN initiated CPC where the MN configures the UE in such a way that the UE will evaluate A3/A5 Event conditions, considering the SpCell as a PSCell.

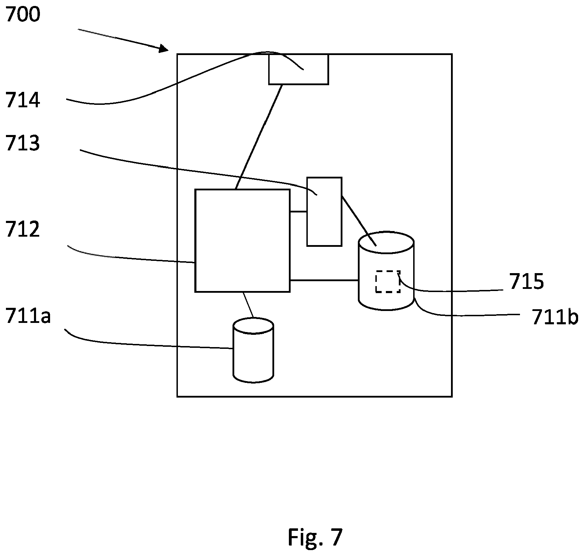

Figure 7 illustrates an example of a control apparatus 700 for controlling a function of the 5GRAN or the 5GC as illustrated on Figure 1. The control apparatus may comprise at least one random access memory (RAM) 711a, at least on read only memory (ROM) 711b, at least one processor 712, 713 and an input/output interface 714. The at least one processor 712, 713 may be coupled to the RAM 711a and the ROM 711b. The at least one processor 712, 713 may be configured to execute an appropriate software code 715. The software code 715 may for example allow to perform one or more steps to perform one or more of the present aspects. The software code 715 may be stored in the ROM 711b. The control apparatus 700 may be interconnected with another control apparatus 700 controlling another function of the 5GRAN or the 5GC. In some embodiments, each function of the 5GRAN or the 5GC comprises a control apparatus 700. In alternative embodiments, two or more functions of the 5GRAN or the 5GC may share a control apparatus.

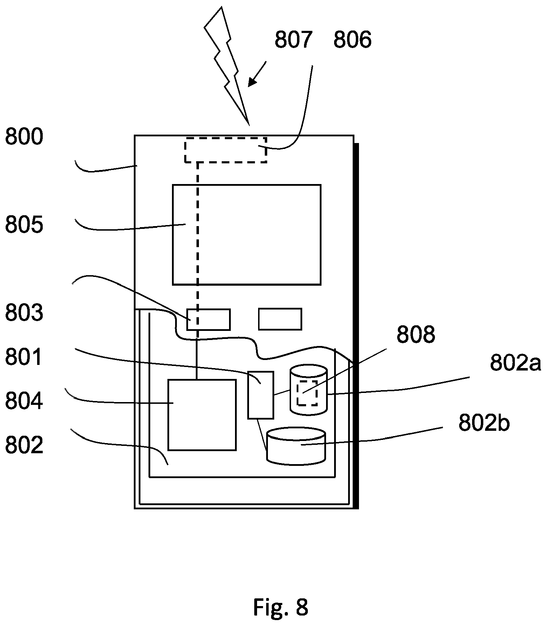

Figure 8 illustrates an example of a terminal 800, such as the terminal illustrated on Figure 1. The terminal 800 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 800 may provide, for example, communication of data for carrying communications. The communications may be one or more of voice, electronic mail (email), text message, multimedia, data, machine data and so on.

The terminal 800 may be provided with at least one processor 801, at least one memory ROM 802a, at least one RAM 802b and other possible components 803 for use in software and hardware aided execution of tasks it is designed to perform, including control of access to and communications with access systems and other communication devices. The at least one processor 801 is coupled to the RAM 802b and the ROM 802a. The at least one processor 801 may be configured to execute an appropriate software code 808. The software code 808 may for example allow to perform one or more of the present aspects. The software code 808 may be stored in the ROM 802a.

The processor, storage and other relevant control apparatus can be provided on an appropriate circuit board and/or in chipsets. This feature is denoted by reference 804. The device may optionally have a user interface such as key pad 805, touch sensitive screen or pad, combinations thereof or the like. Optionally one or more of a display, a speaker and a microphone may be provided depending on the type of the device.

The terminal 800 may receive signals over an air or radio interface 807 via appropriate apparatus for receiving and may transmit signals via appropriate apparatus for transmitting radio signals. In Figure 8 transceiver apparatus is designated schematically by block 806. The transceiver apparatus 806 may be provided for example by means of a radio part and associated antenna arrangement. The antenna arrangement may be arranged internally or externally to the mobile device.

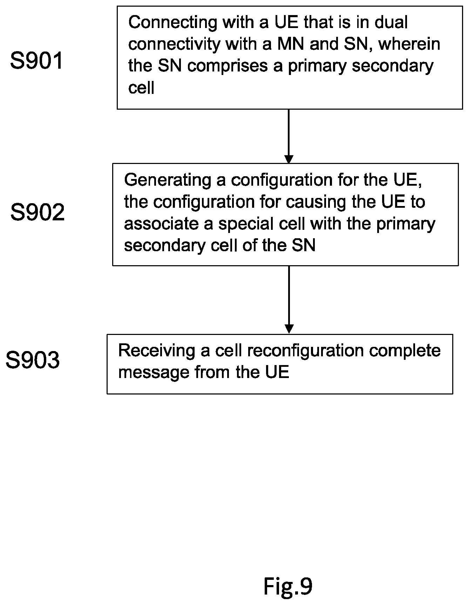

Figure 9 is a flow chart of a method according to an example. The flow chart of Figure 9 is viewed from the perspective of an apparatus. For example, the apparatus may comprise a Master Node apparatus.

As shown at S901, the method comprises connecting with a UE that is in dual connectivity with a MN and SN, wherein the SN comprises a primary secondary cell. According to some examples, the MN is a source MN and the SN is a source SN.

As shown at S902, the method comprises generating a configuration for the UE, the configuration for causing the UE to associate a special cell with the primary secondary cell of the SN.

As shown at S903, the method comprises receiving a cell reconfiguration complete message from the UE. According to some examples, the cell reconfiguration complete message comp a Radio Resource Control message.

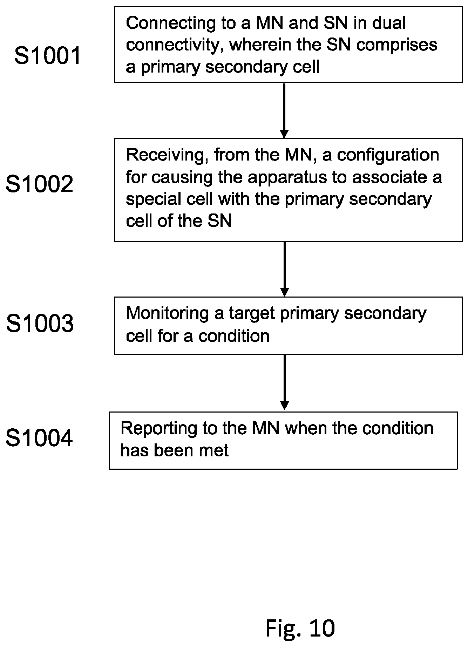

Figure 10 is a flow chart of a method according to an example. The flow chart of Figure 10 is viewed from the perspective of an apparatus. For example, the apparatus may comprise a User Equipment.

As shown at S1001, the method comprises connecting to a MN and SN in dual connectivity, wherein the SN comprises a primary secondary cell. According to some examples, the MN is a source MN and the SN is a source SN.

As shown at S1002, the method comprises receiving, from the MN, a configuration for causing the apparatus to associate a special cell with the primary secondary cell of the SN.

As shown at S1003, the method comprises monitoring a target primary secondary cell for a condition.

As shown at S1004, the method comprises reporting to the MN when the condition has been met.

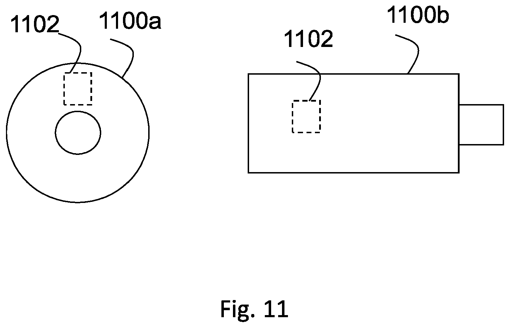

Figure 11 shows a schematic representation of non-volatile memory media 1100a (e.g. computer disc (CD) or digital versatile disc (DVD)) and 1100b (e.g. universal serial bus (USB) memory stick) storing instructions and/or parameters 1102 which when executed by a processor allow the processor to perform one or more of the steps of the method of Figures 9 or 10.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. A master node apparatus comprising:
means for connecting with a user equipment that is in dual connectivity with the master node apparatus and a secondary node, wherein the secondary node comprises a primary secondary cell;
means for generating a configuration for the user equipment, the configuration for causing the user equipment to associate a special cell with the primary secondary cell of the secondary node; and
means for receiving a cell reconfiguration complete message from the user equipment.

2. The apparatus of claim 1, further comprising means for generating a cell change execution condition for a target primary secondary cell.

3. The apparatus of claim 1 or claim 2, further comprising means for transmitting a first addition request to a target secondary node, the first addition request for requesting the target secondary node to add the configuration for the user equipment and the cell change execution condition to a first reconfiguration message.

4. The apparatus of claim 3, further comprising means for receiving the first reconfiguration message from the target secondary node, wherein the configuration for the user equipment and the cell change execution condition are embedded in the first reconfiguration message.

5. The apparatus of claim 3 or claim 4, further comprising means for transmitting a second reconfiguration message to the user equipment, wherein the first reconfiguration message is embedded in the second reconfiguration message.

6. The apparatus of claim 1, further comprising means for determining a list of target primary secondary cells for cell change.

7. The apparatus of claim 6, further comprising means for transmitting a secondary node addition request to the secondary node, wherein the secondary node addition request comprises: a preparation request; the list of target primary secondary cells; the configuration for the user equipment; and measurements of primary secondary cells and target primary secondary cells.

8. The apparatus of claim 7, the preparation request for requesting the secondary node to prepare the list of target primary secondary cells with a cell change execution condition.

9. The apparatus of any of claims 6 to 8, further comprising means for determining a cell change execution condition for the list of target primary secondary cells.

10. The apparatus of claim 9, further comprising means for transmitting the determined cell change execution condition to a secondary node.

11. The apparatus of claim 1 or any of claims 6 to 10, further comprising means for receiving a first reconfiguration message from the secondary node, wherein the first reconfiguration message from the secondary node comprises information of target primary secondary cells prepared with a cell change execution condition and the configuration for the user equipment.

12. The apparatus of claim 11, further comprising means for transmitting a second reconfiguration message to the user equipment, wherein the first reconfiguration message from the secondary node is embedded in the second reconfiguration message.

13. An apparatus comprising:
means for connecting to a master node and a secondary node in a dual connectivity network, wherein the secondary node comprises a primary secondary cell;
means for receiving, from the master node, a configuration for causing the apparatus to associate a special cell with the primary secondary cell of the secondary node;
means for monitoring a target primary secondary cell for a condition; and
means for, when the condition has been met, reporting to the master node.

14. A computer program comprising instructions, which when executed by an apparatus, cause the apparatus to perform at least the following:
connecting with a user equipment that is in dual connectivity with a master node and a secondary node, wherein the secondary node comprises a primary secondary cell;
generating a configuration for the user equipment, the configuration for causing the user equipment to associate a special cell with the primary secondary cell of the secondary node; and
receiving a cell reconfiguration complete message from the user equipment.

15. A computer program comprising instructions, which when executed by an apparatus, cause the apparatus to perform at least the following:
connecting to a master node and a secondary node in a dual connectivity network, wherein the secondary node comprises a primary secondary cell;
receiving, from the master node, a configuration for causing the apparatus to associate a special cell with the primary secondary cell of the secondary node;
monitoring a target primary secondary cell for a condition; and
reporting to the master node when the condition has been met.
